(19) Europäisches Patentamt / European Patent Office / Office européen des brevets

(11) **EP 3 580 793 B1**

(12) **EUROPÄISCHE PATENTSCHRIFT**

(45) Veröffentlichungstag und Bekanntmachung des Hinweises auf die Patenterteilung:
**29.04.2020   Patentblatt 2020/18**

(21) Anmeldenummer: **17704005.2**

(22) Anmeldetag: **09.02.2017**

(51) Int Cl.:
*H01M 4/04* (2006.01)       *H01M 4/134* (2010.01)
*H01M 4/1395* (2010.01)     *H01M 4/38* (2006.01)
*H01M 4/62* (2006.01)

(86) Internationale Anmeldenummer:
**PCT/EP2017/052878**

(87) Internationale Veröffentlichungsnummer:
**WO 2018/145749 (16.08.2018 Gazette 2018/33)**

(54) **MIT POLYMEREN GEPFROPFTE SILICIUMPARTIKEL**

POLYMERS GRAFTED ON SILICON PARTICLES

LES POLYMÈRES GREFFÉS SUR LES PARTICULES DE SILICIUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.12.2019   Patentblatt 2019/51**

(73) Patentinhaber: **Wacker Chemie AG**
**81737 München (DE)**

(72) Erfinder:
• JANTKE, Dominik
84489 Burghausen (DE)
• HAUFE, Stefan
85579 Neubiberg (DE)
• STOHRER, Jürgen
82049 Pullach (DE)

(74) Vertreter: **Ege, Markus et al**
**Wacker Chemie AG**
**Hanns-Seidel-Platz 4**
**81737 München (DE)**

(56) Entgegenhaltungen:
**US-A1- 2016 164 081**

• Ranjan, Rajesh: **"SURFACE MODIFICATION OF SILICA NANOPARTICLES", University of Akron , 1. Mai 2008 (2008-05-01), XP002767972, Gefunden im Internet:**
URL:https://etd.ohiolink.edu/rws_etd/docum ent/get/akron1206558086/inline [gefunden am 2017-03-08]

EP 3 580 793 B1

**Beschreibung**

Die Erfindung betrifft mit Polymeren gepfropfte Siliciumpartikel, Verfahren zur Pfropfung von Siliciumpartikeln mit Polymeren und den Einsatz der mit Polymeren gepfropften Siliciumpartikel in Anodenmaterialien für Lithium-Ionen-Batterien.

Wiederaufladbare Lithiumionen-Batterien sind heute die praxistauglichen elektrochemischen Energiespeicher mit den höchsten gravimetrischen Energiedichten. Eine besonders hohe theoretische Materialkapazität weist Silicium (4200 mAh/g) auf und ist deswegen als Aktivmaterial für Anoden von Lithiumionen-Batterien besonders geeignet. Die Herstellung von Anoden erfolgt über Anodentinten, in denen die einzelnen Bestandteile des Anodenmaterials in einem Lösungsmittel dispergiert sind. Im industriellen Maßstab wird als Lösungsmittel hierfür aus ökonomischen und ökologischen Gründen zumeist Wasser eingesetzt. Die Oberfläche von Silicium ist jedoch gegenüber Wasser sehr reaktiv und wird bei Wasserkontakt oxidiert unter Bildung von Siliciumoxiden und Wasserstoff. Die Wasserstofffreisetzung führt in der Verarbeitung der Anodentinten zu erheblichen Schwierigkeiten. Beispielsweise können solche Tinten auf Grund eingeschlossener Gasblasen inhomogene Elektrodenbeschichtungen ergeben. Zudem macht die Wasserstoffbildung aufwändige sicherheitstechnische Schutzmaßnahmen erforderlich. Eine unerwünschte Oxidation von Silicium führt letztlich auch zur Verringerung des Anteils an elementarem Silicium in der Anode, was die Kapazität der Lithiumionen-Batterie reduziert.

Nachteiligerweise erleiden Silicium enthaltende Elektrodenaktivmaterialien beim Laden bzw. Entladen mit Lithium extreme Volumenänderungen von bis ungefähr 300%. Durch diese Volumenänderung kommt es zu einer starken mechanischen Beanspruchung des Aktivmaterials und der gesamten Elektrodenstruktur, die durch elektrochemisches Mahlen zu einem Verlust der elektrischen Kontaktierung und damit zur Zerstörung der Elektrode unter Kapazitätsverlust führt. Weiterhin reagiert die Oberfläche des eingesetzten Silicium-Anodenmaterials mit Bestandteilen des Elektrolyten unter kontinuierlicher Bildung passivierender Schutzschichten (Solid Electrolyte Interphase; SEI), was zu einem irreversiblen Verlust an mobilem Lithium führt.

Lithiumionen-Batterien mit Siliciumpartikel enthaltenden Anodenmaterialien sind beispielsweise aus der EP1313158 bekannt. Die Siliciumpartikel der EP1313158 haben durchschnittliche Partikelgrößen von 100 bis 500 nm. Größere Partikel werden in der EP1313158 als nachteilig für die Coulomb-Effizienz entsprechender Batterien erachtet. Zum Schutz vor unkontrollierter Oxidation wurden die Siliciumpartikel in EP1313158 nach ihrer Herstellung mittels Mahlung einer gezielten oxidativen Behandlung mit Sauerstoff-haltigen Gasen unterzogen oder alternativ wurde die Oberfläche der Siliciumpartikel mit Polymeren belegt. In einer Variante wurden ethylenisch ungesättigte Monomere in Gegenwart der Siliciumpartikel polymerisiert. Als Monomere kamen unfunktionalisierte Alkene, wie 1-Decene oder 1-Octen, zum Einsatz. In einer weiteren Variante wurde die Oberfläche der Siliciumpartikel mit wasserlöslichen Polymeren beschichtet. Durch eigene Austestungen wurde festgestellt, dass eine abwaschstabile Anbindung der Polymere an die Oberfläche der Siliciumpartikel durch ein bloßes Beschichten nicht erreicht wird. Das Einbetten der Siliciumpartikel in Polymere von unfunktionalisierte Alkenen kann schließlich zu Anodenbeschichtungen führen, die inhomogen sind.

Die WO13175241 beschreibt Siliciumpartikel, die mit Carboxylat- oder Sulfonat-Gruppen tragenden Polymeren belegt sind, mit der essentiellen Maßgabe, dass die Polymere in NMP nicht löslich sind. Die Belegung erfolgte durch Mischen der Siliciumpartikel mit wässrigen Lösungen der Polymere und anschließendem Trocknen. Die so erhältliche Oberflächenbeschichtung ist bei wässriger Verarbeitung nicht abwaschstabil, was zu einer Oxidation der Oberfläche der Siliciumpartikel in erheblichem Umfang führen kann.

Die US2016093879 offenbart Kompositpartikel für Lithium-Ionen-Batterien basierend auf aggregierten Siliciumpartikeln mit durchschnittlichen Partikelgrößen von 1 bis 500 nm, deren Oberfläche mit (Meth)acryl-Polymeren und kristallinem, kohlenstoffbasiertem Nanosheet belegt ist.

Der US2016164081 sind Kern-Schale-Kompositpartikel entnehmbar, deren Kern aus aggregierten Siliciumpartikeln mit durchschnittlichen Partikelgrößen von 1 bis 500 nm besteht, und deren Schale auf Kohlenstoff basiert. Zu deren Herstellung wurde zunächst die Oberfläche von Siliciumpartikeln mit funktionalisierten, Alkoxy-substituierten Silanen silanisiert. In Gegenwart der so behandelten Siliciumpartikel wurde polymerisiert, beispielsweise mit Acrylnitril, Acryl- oder Phenolharz. Anschließend wurden die Polymere carbonisiert. Die so erhaltenen Kompositpartikel waren kleiner als 1 μm, lagen in aggregierter Form vor und wurden zur Herstellung von Lithium-Ionen-Batterien eingesetzt. Für US2016164081 ist es zwingend, dass die Polymere durch Erhitzen in eine Kohlenstoffschicht umgewandelt werden können.

Vor diesem Hintergrund bestand die Aufgabe in der Bereitstellung von Siliciumpartikeln, die bei Einsatz in wässrigen Tintenformulierungen zur Herstellung von Anoden für Lithiumionen-Batterien zu keiner oder einer möglichst geringen Wasserstoffbildung führen, insbesondere kein Aufschäumen von wässrigen Tintenformulierungen oder keine schlechte Pumpbarkeit der Tinten bewirken, und zudem das vorteilhafte Einbringen möglichst hoher Siliciumanteile in die Anoden ermöglichen sowie möglichst homogene Anodenbeschichtungen ergeben sollen. Die Aufgabe sollte vorzugsweise auch für Tintenformulierungen mit neutralen pH-Werten gelöst werden. Darüber hinaus sollte nach Möglichkeit auch eine Verbesserung der elektrochemischen Performance entsprechender Lithiumionen-Batterien mit Siliciumpartikel enthaltenden Anoden erreicht werden.

Gegenstand der Erfindung sind mit Polymeren gepfropfte Siliciumpartikel, wobei die Siliciumpartikel durchschnittliche Partikelgrößen ($d_{50}$) von 1 bis 8 $\mu$m haben und

die Polymere der Polymer gepfropften Siliciumpartikel in wässrigem Medium abwaschstabil an die Siliciumpartikel angebunden sind.

Ein weiterer Gegenstand der Erfindung sind Verfahren zur Herstellung der mit Polymeren gepfropften Siliciumpartikel, indem ein oder mehrere ethylenisch ungesättigte Monomere in Gegenwart von Siliciumpartikeln mit durchschnittlichen Partikelgrößen ($d_{50}$) von 1 bis 8 $\mu$m mittels radikalisch initiierter Polymerisation polymerisiert werden, wobei die Oberfläche der zur Polymerisation eingesetzten Siliciumpartikel ein oder mehrere funktionelle Gruppen trägt ausgewählt aus der Gruppe umfassend

a) Si-H-Gruppen,
b) organische funktionelle Gruppen ausgewählt aus der Gruppe umfassend Alkane und Aromaten, und
c) ethylenisch ungesättigte Silan-Gruppen.

Ein weiterer Gegenstand der Erfindung sind mit Polymeren gepfropfte Siliciumpartikel erhältlich nach dem erfindungsgemäßen Verfahren.

Die Polymer gepfropften Siliciumpartikeln werden im Folgenden auch abgekürzt als gepfropfte Siliciumpartikel bezeichnet.

In den gepfropften Siliciumpartikeln sind die Polymere allgemein über ein oder mehrere kovalente Bindungen an die Siliciumpartikel angebunden. Ohne an eine Theorie gebunden zu sein, kann angenommen werden, dass bei den erfindungsgemäß gepfropften Siliciumpartikeln die Polymere über Si-C-Bindungen an die Siliciumpartikel angebunden sind. Eine solche Anbindung ist nach den erfindungsgemäßen Verfahren zugänglich. In herkömmlichen Produkten dagegen sind die Siliciumpartikel bloß mit Polymeren beschichtet ohne jegliche kovalente Bindung zwischen Siliciumpartikeln und Polymeren, oder es liegt eine instabile oder unzureichende Anbindung vor, wie Silylesterbindungen zwischen Siliciumpartikeln und Polymeren, wie sie beispielsweise bei der Kondensation von Siliciumpartikeln und entsprechenden Hydroxy- oder Carboxy-Gruppen tragenden Polymeren entstehen können.

Die volumengewichtete Partikelgrößenverteilung der Siliciumpartikel weist Durchmesser-Perzentile $d_{50}$ von vorzugsweise 1 $\mu$m bis 8,0 $\mu$m, mehr bevorzugt 2 $\mu$m bis 7,0 $\mu$m, noch mehr bevorzugt 3 $\mu$m bis 6,0 $\mu$m und besonders bevorzugt 4 $\mu$m bis 5,0 $\mu$m auf.

Die volumengewichtete Partikelgrößenverteilung der Siliciumpartikel weist Durchmesser-Perzentile $d_{10}$ von vorzugsweise 0,5 $\mu$m bis 10 $\mu$m, besonders bevorzugt 0,5 $\mu$m bis 5,0 $\mu$m und am meisten bevorzugt 0,5 $\mu$m bis 3,0 $\mu$m auf.

Die volumengewichtete Partikelgrößenverteilung der Siliciumpartikel weist Durchmesser-Perzentile $d_{90}$ von vorzugsweise 2,0 $\mu$m bis 20,0 $\mu$m, besonders bevorzugt 3,0 bis 15,0 $\mu$m und am meisten bevorzugt 5,0 $\mu$m bis 10,0 $\mu$m auf.

Die volumengewichtete Partikelgrößenverteilung der Siliciumpartikel hat eine Breite $d_{90}$-$d_{10}$ von vorzugsweise $\leq$ 20,0 $\mu$m, mehr bevorzugt $\leq$ 15,0 $\mu$m, noch mehr bevorzugt $\leq$ 12,0 $\mu$m, besonders bevorzugt $\leq$ 10,0 $\mu$m und am meisten bevorzugt $\leq$ 7,0 $\mu$m.

Die volumengewichtete Partikelgrößenverteilung der Siliciumpartikel ist bestimmbar durch statische Laserstreuung unter Anwendung des Mie-Modells mit dem Messgerät Horiba LA 950 mit Alkoholen, wie beispielsweise Ethanol oder Isopropanol, oder vorzugsweise Wasser als Dispergiermedium für die Siliciumpartikel.

Die Siliciumpartikel sind vorzugsweise nicht agglomeriert, besonders bevorzugt nicht aggregiert. Aggregiert bedeutet, dass sphärische oder weitestgehend sphärische Primärpartikel, wie sie beispielsweise zunächst in Gasphasenprozessen bei der Herstellung der Siliciumpartikel gebildet werden, zu Aggregaten zusammengewachsen sind. Die Aggregierung von Primärpartikeln kann beispielsweise während der Herstellung der Siliciumpartikel in Gasphasenprozessen auftreten. Solche Aggregate können im weiteren Reaktionsverlauf Agglomerate bilden. Agglomerate sind eine lose Zusammenballung von Aggregaten. Agglomerate können mit typischerweise eingesetzten Knet- und Dispergierverfahren leicht wieder in die Aggregate aufgespalten werden. Aggregate lassen sich mit diesen Verfahren nicht oder nur in geringem Umfang in die Primärpartikel zerlegen. Aggregate und Agglomerate haben auf Grund ihrer Entstehung zwangsläufig ganz andere Sphärizitäten und Kornformen als die bevorzugten Siliciumpartikel. Das Vorliegen von Siliciumpartikeln in Form von Aggregaten oder Agglomeraten kann beispielsweise mittels herkömmlicher Raster-Elektronen-Mikroskopie (REM) sichtbar gemacht werden. Statische Lichtstreuungsmethoden zur Bestimmung der Teilchengrößenverteilungen oder Partikeldurchmessern von Siliciumpartikeln können dagegen nicht zwischen Aggregaten oder Agglomeraten unterscheiden.

Die BET-Oberflächen der Siliciumpartikel betragen vorzugsweise 0,2 bis 30,0 $m^2$/g, besonders bevorzugt 0,5 bis 20,0 $m^2$/g und am meisten bevorzugt 1,0 bis 15,0 $m^2$/g. Die BET-Oberfläche wird gemäß DIN 66131 (mit Stickstoff) bestimmt.

Die Siliciumpartikel liegen vorzugsweise in splittrigen Kornformen vor. Die Siliciumpartikel haben eine Sphärizität von vorzugsweise $0,3 \leq \psi \leq 0,9$, besonders bevorzugt $0,5 \leq \psi \leq 0,85$ und am meisten bevorzugt $0,65 \leq \psi \leq 0,85$. Die Sphärizität $\psi$ ist das Verhältnis aus der Oberfläche einer Kugel gleichen Volumens zur tatsächlichen Oberfläche eines Körpers (Definition von Wadell). Sphärizitäten können beispielsweise aus herkömmlichen REM-Aufnahmen ermittelt werden.

Die Siliciumpartikel basieren vorzugsweise auf elementarem Silicium. Unter elementarem Silicium ist hochreines, polykristallines Silicium, mit geringem Anteil an Fremdatomen (wie beispielsweise B, P, As), gezielt mit Fremdatomen dotiertes Silicium (wie beispielsweise B, P, As), aber auch Silicium aus metallurgischer Verarbeitung, welches elementare Verunreinigung (wie beispielsweise Fe, Al, Ca, Cu, Zr, Sn, Co, Ni, Cr, Ti, C) aufweisen kann, zu verstehen.

Falls die Siliciumpartikel ein Siliciumoxid enthalten, dann liegt die Stöchiometrie des Oxids $SiO_x$ bevorzugt im Bereich $0 < x < 1,3$. Falls die Siliciumpartikel ein Siliciumoxid mit höherer Stöchiometrie enthalten, dann ist dessen Schichtdicke auf der Oberfläche bevorzugt kleiner als 10 nm.

Wenn die Siliciumpartikel mit einem Alkalimetall M legiert sind, dann liegt die Stöchiometrie der Legierung $M_ySi$ bevorzugt im Bereich $0 < y < 5$. Die Siliciumpartikel können gegebenenfalls prälithiiert sein. Für den Fall, dass die Siliciumpartikel mit Lithium legiert sind, liegt die Stöchiometrie der Legierung $Li_zSi$ bevorzugt im Bereich $0 < z < 2,2$.

Besonders bevorzugt sind Siliciumpartikel, die $\geq$ 80 Mol% Silicium und/oder $\leq$ 20 Mol% Fremdatome, ganz besonders bevorzugt $\leq$ 10 Mol% Fremdatome enthalten.

Die Oberfläche der Siliciumpartikel kann gegebenenfalls teilweise oder zumindest teilweise oder weitgehend durch eine Oxidschicht oder Si-OH-Gruppen abgedeckt sein. An die Oberfläche der Siliciumpartikel können auch sonstige übliche anorganische und organische Gruppen angebunden sein. Zur Herstellung von Siliciumpartikeln, die auf der Oberfläche ethylenisch ungesättigte Silan-Gruppen c) tragen, können auch Siliciumpartikel eingesetzt werden, deren Oberfläche vollständig mit einer Oxidschicht und/oder mit Si-OH-Gruppen abgedeckt ist. Zur Herstellung von Siliciumpartikeln, die auf der Oberfläche Si-H-Gruppen a) oder organische funktionelle Gruppen b) tragen, werden vorzugsweise Siliciumpartikel eingesetzt, deren Oberfläche nicht vollständig mit einer Oxidschicht und/oder mit Si-OH-Gruppen abgedeckt ist.

Im erfindungsgemäßen Verfahren finden allgemein Siliciumpartikel Einsatz, die auf der Oberfläche a) Si-H-Gruppen, b) organische funktionelle Gruppen ausgewählt aus der Gruppe umfassend Alkane und Aromaten, oder vorzugsweise c) ethylenisch ungesättigte Silan-Gruppen tragen. Organische funktionelle Gruppen enthalten allgemein ein oder mehrere Kohlenstoffatome. Die Gruppen a) bis c) sind allgemein über kovalente Bindungen an die Siliciumpartikel angebunden und sind an der Oberfläche der Siliciumpartikel frei zugänglich und nicht eingebettet in die Siliciumpartikel oder in eine etwaige Oxidschicht.

Siliciumpartikel mit funktionellen Gruppen a) oder b) sind beispielsweise durch Trocken- oder Nassmahlverfahren erhältlich.

Beim Mahlen von Silicium entstehen aktive Metalloberflächen, die sehr reaktiv gegenüber den Flüssigkeiten der Mahldispersionen sind. So können Moleküle dieser Flüssigkeiten über Additionsreaktionen an die Oberfläche der Siliciumpartikel gebunden werden. Beispielsweise können mit Mahldispersionen, die Alkohole (R-OH) oder Kohlenwasserstoffe (R-H) enthalten, Siliciumpartikel erhalten werden, die an der Oberfläche Si-OR und Si-H-Bindungen beziehungsweise Si-R und Si-H-Bindungen tragen. Durch das Mahlen können also Siliciumpartikel erhalten werden, die Si-H-Bindungen und Si-R-Bindungen mit R als Alkoxy-, Alkyl oder Aryl-Rest haben.

Nassmahlverfahren können beispielsweise in Planetenkugelmühlen, Strahlmühlen, wie Gegenstrahl oder Prallmühlen, oder Rührwerkskugelmühlen durchgeführt werden. In Nassmahlverfahren werden im Allgemeinen Dispersionen von Siliciumpartikeln in einer oder mehreren organischen Flüssigkeiten eingesetzt. Als organische Flüssigkeiten sind Kohlenwasserstoffe, Ester oder insbesondere Alkohole bevorzugt. Die Alkohole enthalten vorzugsweise 1 bis 7 und besonders bevorzugt 2 bis 5 Kohlenstoffatome. Beispiele für Alkohole sind Methanol, Ethanol, Propanol und Butanol. Bevorzugt sind Ethanol und 2-Propanol. Kohlenwasserstoffe enthalten vorzugsweise 5 bis 10 und besonders bevorzugt 6 bis 8 Kohlenstoffatome. Kohlenwasserstoffe können beispielsweise aliphatisch oder aromatisch sein. Beispiele für Kohlenwasserstoffe sind Toluol, Mesitylen und Heptan. Bei Estern handelt es sich im Allgemeinen um Ester von Carbonsäuren und Alkylalkoholen, wie beispielsweise Ethylacetat. Besonders bevorzugt sind Kohlenwasserstoffe, insbesondere Toluol, Mesitylen und Heptan. Bevorzugte organische Flüssigkeiten enthalten weniger als 5 Gew.-% Wasser, besonders bevorzugt weniger als 1 Gew.-% und am meisten bevorzugt kein Wasser.

Trockenmahlverfahren können beispielsweise in Strahlmühlen, Kugelmühlen oder Schlagmühlen durchgeführt werden. Das Mahlgas oder die Atmosphäre beim Trockenmahlverfahren enthält vorzugsweise Stickstoff, Edelgase oder sonstige Inertgase. Des Weiteren kann das Mahlgas Anteile an Wasser und/oder organischen Flüssigkeiten enthalten, insbesondere solche, die weiter oben für Nassmahlverfahren aufgeführt sind. Zum Einbringen der Gruppen a) und/oder b) in die Siliciumpartikel können aber auch die in industriellen oder technischen Gasen üblicherweise enthaltenen Verunreinigungen, wie Restfeuchte, hinreichend sein.

Auch die weiteren kennzeichnenden Parameter oder Eigenschaften der erfindungsgemäß eingesetzten Siliciumpartikel, wie deren durchschnittliche Partikelgrößen, können mit den Mahlverfahren in an sich bekannter Weise dargestellt werden.

Siliciumpartikel, an deren Oberfläche ethylenisch ungesättigte Silan-Gruppen c) angebunden sind, sind beispielsweise erhältlich durch Silanisieren von Siliciumpartikeln mit einem oder mehreren ethylenisch ungesättigten Silanen, die mit einer oder mehreren hydrolytisch abspaltbaren Gruppen substituiert sind. Beispiele für hydrolytisch abspaltbare Gruppen sind Alkoxy- und Halogen-, wie Chlor-, Gruppen.

Die ethylenisch ungesättigten, mit hydrolytisch abspaltbaren Gruppen substituierten Silane werden im Folgenden auch abgekürzt als Silane bezeichnet.

Für das Silanisieren können beispielsweise die nach Trocken- oder Nassmahlverfahren hergestellten Siliciumpartikel eingesetzt werden. In Folge dieser Herstellung oder beispielsweise auf Kontakt mit Umgebungsluft unter Normalbedingungen erfährt die Oberfläche der Siliciumpartikel im Allgemeinen eine Oxidation. Deswegen ist die Oberfläche der Siliciumpartikel üblicherweise auch mit einer Oxidschicht SiOx und/oder Si-OH-Gruppen belegt, wie weiter oben schon angegeben. Über solche SiOx oder Si-OH-Gruppen können beispielsweise durch Kondensationsreaktionen mit den mit hydrolytisch abspaltbaren Gruppen substituierten Silanen unter Freisetzung der hydrolytisch abspaltbaren Gruppen Silangruppen an die Siliciumpartikel angebunden werden.

Geeignete Silane sind beispielsweise ethylenisch ungesättigte Siliciumverbindungen der allgemeinen Formel $R^1SiR^2_{0-2}X_{1-3}$, wobei

$R^1$ die Bedeutung $CH_2=CR^4 - (CH_2)_{0-1}$ oder $CH_2=CR^4CO_2 (CH_2)_{1-3}$ hat,

$R^2$ die Bedeutung $C_1$- bis $C_{12}$-Alkylrest, vorzugsweise $C_1$ bis $C_3$-Alkylrest, insbesondere bevorzugt $CH_3$ hat,

X für $(OR^3)$, Acetoxy oder Halogen, vorzugsweise Cl, steht, $R^3$ ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei

$R^3$ gegebenenfalls durch eine Ethergruppe unterbrochen sein kann, und

$R^4$ für H oder $CH_3$ steht.

Bevorzugt sind Silane, die als Reste X ein oder mehrere Gruppen $(OR^3)$, vorzugsweise ausschließlich ein oder mehrere Gruppen $(OR^3)$ tragen; das heißt, ethylenisch ungesättigte, Alkoxy-Silane sind bevorzugt.

Beispiele für Silane sind γ-Acryl- bzw. γ-Methacryloxypropyltri-(alkoxy)silane, α-Methacryloxymethyltri(alkoxy)silane, γ-Methacryloxypropyl-methyldi(alkoxy)silane; Vinylsilane wie Vinylalkyldi(alkoxy)silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können.

Beispiele für bevorzugte Silane sind 3-Methacryloxypropyltrimethoxysilan, 3-Methacryloxypropylmethyldimethoxysilan, Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, Methacryloxymethyltrimethoxysilan, 3-Methacryloxypropyl-tris(2-methoxyethoxy)-silan, Vinyltrichorsilan, Vinylmethyldichlorsilan, Vinyltris-(2-methoxyethoxy)silan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan.

Als Silane werden am meisten bevorzugt Vinyltrimethoxysilan, Vinylmethyldimethoxysilan, Vinyltriethoxysilan, Vinylmethyldiethoxysilan, , Vinyltris-(2-methoxyethoxy)silan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan sowie deren Gemische.

Geeignete Silane sind auch Silan-Gruppen enthaltene (Meth)acrylamide, der allgemeinen Formel $CH_2=CR^5-CO-NR^5-R^6-SiR^7_n(X)_{3-n}$, wobei n= 0 bis 2, $R^5$ für H oder $CH_3$ steht, $R^6$ eine AlkylenGruppe mit 1 bis 5 C-Atomen oder eine bivalente organische Gruppe, in welcher die Kohlenstoffkette durch ein O- oder N-Atom unterbrochen wird, ist, und

$R^7$ die Bedeutung $C_1$- bis $C_{12}$-Alkylrest, vorzugsweise $C_1$ bis $C_3$-Alkylrest, insbesondere bevorzugt $CH_3$ hat. Beispiele für (Meth)acrylamido-alkylsilane sind: 3-(Meth)acrylamido-propyltrimethoxysilan, 3-(Meth)acrylamido-propyltriethoxysilan.

Die Silane werden vorzugsweise in einer Menge von 0,2 bis 25 Gew.-%, besonders bevorzugt 0,5 bis 10 Gew.-% eingesetzt, jeweils bezogen auf das Gesamtgewicht der Siliciumpartikel.

Die Silane und die Siliciumpartikel können in Reinsubstanz oder vorzugsweise in einem Lösungsmittel umgesetzt werden. Als Lösungsmittel eignen sich beispielsweise die weiter oben für die Nassmahlverfahren genannten organischen Flüssigkeiten. Die Lösungsmittel enthalten vorzugsweise weniger als 1 Gew.-% Wasser, besonders bevorzugt weniger als 0,1 Gew.-% Wasser und am meisten bevorzugt kein Wasser.

Der Reaktionsmischung werden vorzugsweise ein oder mehrere Säuren zugesetzt, beispielsweise anorganische oder vorzugsweise organische Säuren. Es können Lewis-Säuren oder Brönsted-Säuren Einsatz finden. Beispiele für anorganische Säuren sind Schwefelsäure, Salzsäure oder Kohlensäure. Beispiele für organische Säuren sind Sulfonsäuren, insbesondere Toluolsulfonsäure. Vorzugsweise werden 0,05 bis 5 Gew.-% Säuren eingesetzt, bezogen auf das Gesamtgewicht der Silane.

Die Silanisierung erfolgt bei Temperaturen von vorzugsweise 20°C und 105°C, besonders bevorzugt 25°C und 80°C und am meisten bevorzugt 30°C und 60°C.

Das Vorhandensein von Gruppen a), b) oder c) auf der Oberfläche der Siliciumpartikel kann beispielsweise mittels herkömmlicher, oberflächensensitiver IR-Spektroskopie nachgewiesen werden.

Die Siliciumpartikel mit Gruppen b) oder c) auf der Oberfläche haben einen Kohlenstoffgehalt von vorzugsweise 0,03 bis 2 Gew.%, besonders bevorzugt 0,05 bis 1 Gew.% und am meisten bevorzugt 0,06 bis 0,5 Gew.%, bezogen auf das Gesamtgewicht der Siliciumpartikel (Bestimmungsmethode: Elementaranalyse).

Bevorzugt werden Siliciumpartikel eingesetzt, die auf der Oberfläche ethylenisch ungesättigte Silan-Gruppen c) tragen.

Für die Polymerisation zur Pfropfung der Siliciumpartikel geeignete ethylenisch ungesättigte Monomere können beispielsweise ausgewählt werden aus der Gruppe umfassend Vinylester, (Meth)-acrylsäureester, Vinylaromaten, Olefine, 1,3-Diene, Vinylhalogenide und ethylenisch ungesättigte Carbonsäuren, wobei die Mo-, nomere gegebenenfalls weitere funktionelle Gruppen tragen können.

Beispiele für ethylenisch ungesättigte Carbonsäuren sind Acrylsäure, Methacrylsäure, Fumarsäure und Maleinsäure.

Geeignet sind beispielsweise Vinylester von Carbonsäuren mit 2 bis 18 C-Atomen, wie Vinylacetat, Vinylpropionat, Vinylbutyrat, Vinyl-2-ethylhexanoat, Vinyllaurat, 1-Methylvinylacetat, Vinylpivalat und Vinylester von $\alpha$-verzweigten Monocarbonsäuren mit 9 bis 11 C-Atomen, beispielsweise VeoVa9® oder VeoVa10® (Handelsnamen der Firma Resolution).

Geeignete Acrylsäureester oder Methacrylsäureester sind beispielsweise Ester von unverzweigten oder verzweigten Alkoholen mit 1 bis 22 C-Atomen, insbesondere 1 bis 15 C-Atomen. Bevorzugte Methacrylsäureester oder Acrylsäureester sind Methylacrylat, Methylmethacrylat, Ethylacrylat, Ethylmethacrylat, n-Butylacrylat, n-Butylmethacrylat. Besonders bevorzugt sind Methylacrylat, Methylmethacrylat, n-Butylacrylat.

Als Vinylaromaten bevorzugt sind Styrol, Methylstyrol, Vinyltoluol und Vinylpyridin. Bevorzugtes Vinylhalogenid ist Vinylchlorid. Bevorzugtes Olefin mit mindestens 3 C-Atomen ist Propylen und die bevorzugten Diene sind 1,3-Butadien und Isopren.

Es können auch vernetzende Monomere eingesetzt werden, wie beispielsweise Hydroxy-Gruppen tragende Monomere, wie (Meth)Acrylsäurehydroxyalkylester, insbesondere Hydroxyethyl-, Hydroxypropyl- oder Hydroxybutylacrylat oder -methacrylat; Amino-funktionelle Monomere, wie 2-Dimethylaminoethylmethacrylat(DMAEMA), 3-Dimethylaminopropylmethacrylamid (DMAPMA); epoxidfunktionelle Monomere, wie Glycidylmethacrylat, Glycidylacrylat, Allylglycidether, Vinylglycidether; mehrfach ethylenisch ungesättigte Monomere, wie Ethylenglykoldimethacrylat, Divinyladipat, Diallylmaleat, Allylmethacrylat oder Triallylcyanurat.

Weitere Beispiele für ethylenisch ungesättigte Monomere mit weiteren funktionellen Gruppen sind auch ethylenisch ungesättigte Carbonsäureamide und -nitrile, wie Acrylamid und Acrylnitril; Polyether mit ethylenisch ungesättigten Gruppen, wie Polyethylenglykolmethacrylat; Carbonat-Gruppen tragende Monomere, wie Vinylencarbonat.

Bevorzugte Monomere sind Acrylsäure, Methacrylsäure, Vinylencarbonat, Methylmethacrylat, Styrol, funktionalisierte StyrolDerivate und Vinylpyridin. Bevorzugt sind auch Dimethylaminoethylmethacrylat, Hydroxyethylmethacrylat, Ethylenglykoldimethacrylat, Glycidylmethacrylat und Polyethylenglykolmethacrylat.

Besonders bevorzugt sind Homo- und Copolymere von ethylenisch ungesättigten Carbonsäuren, vorzugsweise der Fumarsäure, der Maleinsäure, insbesondere der Methacrylsäure und mehr bevorzugt der Acrylsäure. Bevorzugte Copolymere basieren auf (Meth)Acrylsäure und 0,1 bis 50 Gew.-%, besonders bevorzugt 0,5 bis 30 Gew.-% und am meisten bevorzugt 1 bis 10 Gew.-% an einem oder mehreren zusätzlichen ethylenisch ungesättigten Monomeren, bezogen auf das Gesamtgewicht der Copolymere. Weitere bevorzugte Copolymere basieren auf (Meth)Acrylsäure und 30 bis 80 Gew.-%, besonders bevorzugt 40 bis 70 Gew.-% und am meisten bevorzugt 50 bis 60 Gew.-% an einem oder mehreren zusätzlichen ethylenisch ungesättigten Monomeren, insbesondere Vinylencarbonat, bezogen auf das Gesamtgewicht der Copolymere. Bei den zusätzlichen ethylenisch ungesättigten Monomeren handelt es sich vorzugsweise um die oben aufgeführten oder bevorzugten, von (Meth)Acrylsäure verschiedenen ethylenisch ungesättigten Monomeren. Solche Monomerkombinationen ergeben überraschenderweise besonders vorteilhafte, homogene Elektrodenbeschichtung und führen zu einer verbesserten elektrochemischen Performance entsprechender Batterien.

Die Polymerisation der ethylenisch ungesättigten Monomere in Gegenwart von Siliciumpartikeln kann in Substanz oder in einem Dispergiermittel erfolgen.

Als Dispergiermittel eignen sich beispielsweise die weiter oben für die Nassmahlverfahren genannten organischen Flüssigkeiten oder anorganische Flüssigkeiten, wie Wasser. Bevorzugte Dispergiermittel sind Toluol, Ethylacetat, Ethanol oder Wasser. Die Monomere sind im Dispergiermittel vorzugsweise löslich. Die Siliciumpartikel sind durch das Dispergiermittel vorzugsweise benetzbar.

Geeignete Radikalinitiatoren sind beispielsweise Peroxide, wie t-Butylperoxy-2-ethylhexanoat, t-Butylperoxypivalat, t-Butylperoxyneodecanoat, t-Amylperoxypivalat, Di-(2-ethylhexyl)peroxydicarbonat, 1,1-Bis(t-Butylperoxy)-3,3,5-trimethylcyclohexan, Di-(4-t-Butylcyclohexyl)peroxydicarbonat und insbesondere Dibenzoylperoxid; Azoinitiatoren, wie Azobisisobutyronitril. Die Initiatoren werden im Allgemeinen in einer Menge von 0,005 bis 10 Gew.-%, bevorzugt 0,05 bis 5 Gew.-% und besonders bevorzugt 0,1 bis 3 Gew.-%, jeweils bezogen auf Gesamtgewicht der ethylenisch ungesättigten Monomere, eingesetzt.

Die Polymerisation kann beispielsweise in einem Rührgefäß oder einem Druckkessel durchgeführt werden. Die Reaktionstemperatur für die Polymerisation beträgt vorzugsweise 20°C bis 180°C, besonders bevorzugt 60°C bis 120°C und am meisten bevorzugt 80°C bis 100°C. Der Druck liegt beispielsweise im Bereich von 1 bar bis 6 bar. Die Polymerisation kann unter Vorlage aller oder einzelner Bestandteile des Polymerisationsgemisches, oder unter teilweiser Vorlage und Nachdosierung aller oder einzelner Bestandteile des Polymerisationsgemisches, oder nach dem Dosierverfahren ohne Vorlage durchgeführt werden.

Bei Polymerisation in einem Dispergiermittel wird die Polymerisation bis zu einem Festgehalt von vorzugsweise 2% bis 95%, mehr bevorzugt 5% bis 80%, besonders bevorzugt 10% bis 50% und noch mehr bevorzugt 15% bis 30% durchgeführt.

Bei Polymerisation in einem Dispergiermittel können die so erhaltenen gepfropften Siliciumpartikel durch Sedimentation oder vorzugsweise Zentrifugation abgetrennt werden. Alternativ kann auch getrocknet werden, beispielsweise mittels Wirbelschichttrocknung, Gefriertrocknung, thermischer Trocknung, Trocknung im Vakuum, Kontakttrocknung, Konvektionstrocknung oder mittels Sprühtrocknung.

Zur Reinigung können die gepfropften Siliciumpartikel durch ein oder vorzugsweise mehrere Waschschritte getrennt werden von nicht umgesetzten Monomeren, Beiprodukten oder insbesondere von freien Polymeren. Freie Polymere sind Polymere, die nicht auf die Siliciumpartikel gepfropft sind.

Als Lösungsmittel für die Waschschritte eignen sich beispielsweise die weiter oben für die Nassmahlverfahren genannten organischen Flüssigkeiten oder anorganische Flüssigkeiten, wie Wasser. Es können auch polar-aprotische Lösungsmittel eingesetzt werden, wie Dimethylformamid (DMF), Dimethylsulfoxid (DMSO) oder Aceton. Bevorzugte Lösungsmittel sind Toluol, Aceton, Ethylacetat, Ethanol oder Wasser.

Vorzugsweise werden für die Waschschritte ein oder mehrere Lösungsmittel gewählt, in denen die freien Polymere löslich und/oder die gepfropften Siliciumpartikel vorzugsweise dispergierbar sind. Löslich bedeutet, dass die freien Polymere im Lösungsmittel unter Normalbedingungen (23/50) nach DIN50014 zu vorzugsweise $\geq$ 1 Gew.-% und besonders bevorzugt $\geq$ 5 Gew.-% löslich sind.

Es kann mehrere Male mit demselben Lösungsmittel gewaschen werden. Vorzugsweise wird mehrere Male nacheinander mit unterschiedlichen Lösungsmitteln gewaschen; beispielsweise ein oder mehrere Male mit unpolaren Lösungsmitteln, wie Toluol, und/oder ein oder mehrere Male mit protischen Lösungsmitteln, wie Alkoholen, und/oder ein oder mehrere Male mit polar-aprotischen Lösungsmitteln, wie Aceton, und/oder ein oder mehrere Male mit anorganischen Lösungsmitteln, wie Wasser.

Das Waschen kann bei Temperaturen von beispielsweise 15°C bis 80°C, vorzugsweise 20°C bis 60°C und besonders bevorzugt 20°C bis 40°C durchgeführt werden.

Die gepfropften Siliciumpartikel können von den Waschlösungen beispielsweise durch Sedimentation oder vorzugsweise Zentrifugation abgetrennt werden. Ein Trocknen kann beispielsweise mittels Wirbelschichttrocknung, Gefriertrocknung, thermischer Trocknung, Trocknung im Vakuum, Kontakttrocknung, Konvektionstrocknung oder mittels Sprühtrocknung erfolgen.

Waschschritte werden vorzugsweise so oft wiederholt, bis aus dem Produkt enthaltend die gepfropften Siliciumpartikel nichts mehr herausgewaschen wird. Dies kann beispielsweise dadurch festgestellt werden, dass das zuletzt für einen Waschritt eingesetzte Lösungsmittel nach Einengen zur Trockene keinen Rückstand ergibt. Alternativ kann so oft gewaschen werden, bis das zum Waschen eingesetzte Produkt und das nach dem Waschen isolierte und getrocknete Produkt enthaltend die gepfropften Siliciumpartikel dasselbe Gewicht aufweisen. Bevorzugt wird so oft gewaschen werden, bis sich der Kohlenstoffgehalt des zum Waschen eingesetzten Produkts und des nach dem Waschen isolierten und getrockneten Produkts enthaltend die gepfropften Siliciumpartikel um $\leq$ 0,05 Gew.-% unterscheiden (Bestimmungsmethode: Elementaranalyse).

Die gepfropften Siliciumpartikel sind vorzugsweise redispergierbar, insbesondere in Wasser.

Die Polymere der gepfropften Siliciumpartikel sind in wässrigem Medium abwaschstabil an die Siliciumpartikel angebunden. Die erfindungsgemäße Anbindung manifestiert sich beispielsweise dadurch, dass die gepfropften Siliciumpartikel nach Redispergierung in Wasser keine oder im Wesentlichen keine Polymere freisetzen. Die abwaschstabile Anbindung der Polymere an die Siliciumpartikel in wässrigem Medium kann beispielsweise dadurch charakterisiert werden, dass nach Waschen der gepfropften Siliciumpartikel mit Wasser bei pH 7 und 20°C und anschließendem Abtrennen des Wassers, beispielsweise über Zentrifugation oder Filtration, sowie anschließendem Trocknen der gepfropften Siliciumpartikel $\geq$ 99 Gew.-% gepfropfte Siliciumpartikel reisoliert werden, bezogen auf das Trockengewicht der zur Ermittlung der Abwaschstabilität eingesetzten gepfropften Siliciumpartikel. Die so behandelten gepfropften Siliciumpartikel enthalten vorzugsweise $\geq$ 99 Gew.-% Kohlenstoff, bezogen auf den Kohlenstoffgehalt der zur Ermittlung der Abwaschstabilität eingesetzten gepfropften Siliciumpartikel (Bestimmungsmethode: Elementaranalyse). Vor Ermittlung der Abwaschstabilität werden die mittels Polymerisation erhaltenen gepfropften Siliciumpartikel vorzugsweise den weiter oben beschriebenen Waschschritten unterworfen.

Die gepfropften Siliciumpartikel sind vorzugsweise nicht agglomeriert, besonders bevorzugt nicht aggregiert.

Der Aggregationsgrad der gepfropften Siliciumpartikel ist vorzugsweise ≤ 20%, besonders bevorzugt ≤ 10% und am meisten bevorzugt insbesondere ≤ 5% (Bestimmungsmethode weiter unten beschrieben).

Die volumengewichtete Partikelgrößenverteilung der gepfropften Siliciumpartikel weist Durchmesser-Perzentile $d_{50}$ von vorzugsweise 700 nm bis 10 μm, mehr bevorzugt 1 μm bis 8,0 μm, noch mehr bevorzugt 2 μm bis 7,0 μm, besonders bevorzugt 3 μm bis 6,0 μm und am meisten bevorzugt 4 μm bis 5,0 μm auf.

Die volumengewichtete Partikelgrößenverteilung der gepfropften Siliciumpartikel hat eine Breite $d_{90}$-$d_{10}$ von vorzugsweise ≤ 20,0 μm, mehr bevorzugt ≤ 15,0 μm, noch mehr bevorzugt ≤ 12,0 μm, besonders bevorzugt ≤ 10,0 μm und am meisten bevorzugt ≤ 7,0 μm.

Die volumengewichtete Partikelgrößenverteilung der gepfropften Siliciumpartikel ist bestimmbar durch statische Laserstreuung unter Anwendung des Mie-Modells mit dem Messgerät Horiba LA 950 mit Alkoholen, wie beispielsweise Ethanol oder Isopropanol, oder vorzugsweise Wasser als Dispergiermedium für die redispergierbaren Siliciumpartikel.

Die BET-Oberflächen der gepfropften Siliciumpartikel betragen vorzugsweise 0,2 bis 30,0 m$^2$/g, besonders bevorzugt 0,5 bis 20,0 m$^2$/g und am meisten bevorzugt 1,0 bis 15,0 m$^2$/g. Die BET-Oberfläche wird gemäß DIN 66131 (mit Stickstoff) bestimmt.

Die gepfropften Siliciumpartikel liegen vorzugsweise in splittrigen Kornformen vor. Die redispergierbaren Partikel aus Schritt b) haben eine Sphärizität von vorzugsweise $0,3 \leq \psi \leq 0,9$, besonders bevorzugt $0,5 \leq \psi \leq 0,85$ und am meisten bevorzugt $0,65 \leq \psi \leq 0,85$. Die Sphärizität $\psi$ ist das Verhältnis aus der Oberfläche einer Kugel gleichen Volumens zur tatsächlichen Oberfläche eines Körpers (Definition von Wadell). Sphärizitäten können beispielsweise aus herkömmlichen REM-Aufnahmen ermittelt werden.

Die gepfropften Siliciumpartikel basieren auf vorzugsweise 80 bis 99,7 Gew. %, mehr bevorzugt 90 bis 99,5 Gew.%, besonders bevorzugt 95 bis 99,2 Gew.% und am meisten bevorzugt 95 bis 98,5 Gew.% Silicium, jeweils bezogen auf das Gesamtgewicht der gepfropften Siliciumpartikel (Bestimmungsmethode: Elementaranalyse).

Die gepfropften Siliciumpartikel haben einen Kohlenstoffgehalt von vorzugsweise 0,2 bis 10 Gew.%, bezogen auf das Gesamtgewicht der gepfropften Siliciumpartikel (Bestimmungsmethode: Elementaranalyse).

Die gepfropften Siliciumpartikel basieren auf vorzugsweise 0,3 bis 20 Gew.%, mehr bevorzugt 0,5 bis 10 Gew.%, besonders bevorzugt 0,8 bis 5 Gew.% und am meisten bevorzugt 1,5 bis 5 Gew.% Polymeren, jeweils bezogen auf das Gesamtgewicht der gepfropften Siliciumpartikel. Die Zusammensetzung der gepfropften Siliciumpartikel ist beispielsweise mittels der weiter unten beschriebenen Elementaranalyse zugänglich. Der Polymeranteil kann beispielsweise aus dem gemessenen Kohlenstoffanteil der gepfropften Siliciumpartikel und dem Kohlenstoffanteil des aufgepfropften Polymers berechnet werden. Dazu wird der gemessene Kohlenstoffanteil der gepfropften Siliciumpartikel durch den Kohlenstoffanteil der aufgepfropften Polymere dividiert.

Die mittlere Dicke der Schicht aus aufgepfropften Polymeren auf den Siliciumpartikeln liegt bevorzugt zwischen 1 und 200 nm, besonders bevorzugt zwischen 5 und 100 nm, am meisten bevorzugt zwischen 10 und 50 nm. Die mittlere Schichtdicke ist über folgende Formel zugänglich:

$$d(Polymer) = \frac{\frac{[C]}{[C_{Polymer}] * \rho_{Polymer}}}{\left[1 - \left(\frac{[C]}{[C_{Polymer}]}\right)\right] * \left[\frac{6}{\rho_{Silicium} * d_{50}}\right]}$$

worin die einzelnen Parameter folgende Bedeutung haben: d(Polymer): mittlere Schichtdicke des Polymers;

[C]: Kohlenstoffanteil des gepfropften Siliciumpartikels, bestimmt durch Elementaranalyse;

[C$_{Polymer}$] : Kohlenstoffanteil des Polymers, bestimmt durch Elementaranalyse;

$\rho_{Polymer}$: Dichte des Polymers, bestimmt durch Gaspyknometrie gemäß DIN 66137-2;

$\rho_{Silicium}$: Dichte des Siliciums (2,3 g/cm$^3$);

$d_{50}$: Mittelwert der Partikelgrößenverteilung der Siliciumpartikel, bestimmt durch Lichtstreuung;

Die Dichte von Polyacrylsäure beträgt beispielsweise 1,4 g/cm$^3$.

Ein weiterer Gegenstand der Erfindung sind wässrige Tintenformulierungen enthaltend ein oder mehrere Bindemittel, gegebenenfalls Graphit, gegebenenfalls eine oder mehrere weitere elektrisch leitende Komponenten und gegebenenfalls ein oder mehrere Additive, dadurch gekennzeichnet, dass erfindungsgemäß gepfropfte Siliciumpartikel enthalten sind.

Ein weiterer Gegenstand der Erfindung sind Anodenmaterialien für Lithium-Ionen-Batterien enthaltend ein oder mehrere Bindemittel, gegebenenfalls Graphit, gegebenenfalls eine oder mehrere weitere elektrisch leitende Komponenten und gegebenenfalls ein oder mehrere Additive, dadurch gekennzeichnet, dass ein oder mehrere erfindungsgemäß gepfropfte Siliciumpartikel enthalten sind.

Bevorzugte Rezepturen für das Anodenmaterial der Lithium-Ionen-Batterien enthalten vorzugsweise 5 bis 95 Gew.-%, insbesondere 60 bis 85 Gew.-% gepfropfte Siliciumpartikel; 0 bis 40 Gew.-%, insbesondere 0 bis 20 Gew.-% weitere elektrisch leitende Komponenten; 0 bis 80 Gew.-%, insbesondere 5 bis 30 Gew.-% Graphit; 0 bis 25 Gew.-%, vorzugsweise 1 bis 20 Gew.-%, besonders bevorzugt 5 bis 15 Gew.-% Bindemittel; und gegebenenfalls 0 bis 80 Gew.-%, insbesondere 0,1 bis 5 Gew.-% Additive; wobei sich die Angaben in Gew.-% auf das Gesamtgewicht des Anodenmaterials beziehen und sich die Anteile aller Bestandteile des Anodenmaterials auf 100 Gew.-% aufsummieren.

In einer bevorzugten Rezeptur für das Anodenmaterial ist der Anteil von Graphitpartikeln und weiteren elektrisch leitenden Komponenten in Summe mindestens 10 Gew.-%, bezogen auf das Gesamtgewicht des Anodenmaterials.

Die Anodentinte weist einen pH-Wert auf von vorzugsweise 5,5 bis 8,5 und besonders bevorzugt 6,5 bis 7,5 (bestimmt bei 20°C, beispielsweise mit dem pH-Meter von WTW pH 340i mit Sonde SenTix RJD).

Ein weiterer Gegenstand der Erfindung sind Lithium-Ionen-Batterien umfassend eine Kathode, eine Anode, einen Separator und einen Elektrolyt, dadurch gekennzeichnet, dass die Anode auf dem vorgenannten, erfindungsgemäßen Anodenmaterial basiert.

Neben den erfindungsgemäßen, gepfropften Siliciumpartikeln können zur Herstellung der erfindungsgemäßen Anodenmaterialien und Lithium-Ionen-Batterien die hierfür gängigen Ausgangsmaterialien eingesetzt werden und die hierfür üblichen Verfahren zur Herstellung der Anodenmaterialien und Lithium-Ionen-Batterien Anwendung finden, wie beispielsweise in der Patentanmeldung mit der Anmeldenummer DE 102015215415.7 beschrieben.

Ein weiterer Gegenstand der Erfindung sind Lithium-Ionen-Batterien umfassend eine Kathode, eine Anode, einen Separator und einen Elektrolyt, dadurch gekennzeichnet, dass die Anode auf dem vorgenannten, erfindungsgemäßen Anodenmaterial basiert; und das Anodenmaterial der vollständig geladenen Lithium-Ionen-Batterie nur teilweise lithiiert ist.

Ein weiterer Gegenstand der vorliegenden Erfindung sind Verfahren zum Beladen von Lithium-Ionen-Batterien umfassend eine Kathode, eine Anode, einen Separator und einen Elektrolyt, dadurch gekennzeichnet, dass die Anode auf dem vorgenannten, erfindungsgemäßen Anodenmaterial basiert; und das Anodenmaterial beim vollständigen Laden der Lithium-Ionen-Batterie nur teilweise lithiiert wird.

Ein weiterer Gegenstand der Erfindung ist die Verwendung der erfindungsgemäßen Anodenmaterialien in Lithium-Ionen-Batterien, die so konfiguriert sind, dass die Anodenmaterialien im vollständig geladenen Zustand der Lithium-Ionen-Batterien nur teilweise lithiiert sind.

Bevorzugt ist also, dass das Anodenmaterial, insbesondere die Siliciumpartikel, in der vollständig geladenen Lithium-Ionen-Batterie nur teilweise lithiiert ist. Vollständig geladen bezeichnet den Zustand der Batterie, in dem das Anodenmaterial der Batterie ihre höchste Beladung an Lithium aufweist. Teilweise Lithiierung des Anodenmaterials bedeutet, dass das maximale Lithiumaufnahmevermögen der Siliciumpartikel im Anodenmaterial nicht ausgeschöpft wird. Das maximale Lithiumaufnahmevermögen der Siliciumpartikel entspricht allgemein der Formel $Li_{4,4}Si$ und beträgt somit 4,4 Lithiumatome pro Siliciumatom. Dies entspricht einer maximalen spezifischen Kapazität von 4200 mAh pro Gramm Silicium.

Das Verhältnis der Lithiumatome zu den Siliciumatomen in der Anode einer Lithium-Ionen-Batterie (Li/Si-Verhältnis) kann beispielsweise über den elektrischen Ladungsfluss eingestellt werden. Der Lithiierungsgrad des Anodenmaterials beziehungsweise der im Anodenmaterial enthaltenen Siliciumpartikel ist proportional zur geflossenen elektrischen Ladung. Bei dieser Variante wird beim Laden der Lithium-Ionen-Batterie die Kapazität des Anodenmaterials für Lithium nicht voll ausgeschöpft. Dies resultiert in einer teilweisen Lithiierung der Anode.

Bei einer alternativen, bevorzugten Variante wird das Li/Si-Verhältnis einer Lithium-Ionen-Batterie durch das Zellbalancing eingestellt. Hierbei werden die Lithium-Ionen-Batterien so ausgelegt, dass das Lithiumaufnahmevermögen der Anode vorzugsweise größer ist als das Lithiumabgabevermögen der Kathode. Dies führt dazu, dass in der vollständig geladenen Batterie das Lithiumaufnahmevermögen der Anode nicht voll ausgeschöpft ist, d.h. dass das Anodenmaterial nur teilweise lithiiert ist.

Bei der erfindungsgemäßen teilweisen Lithiierung beträgt das Li/Si-Verhältnis im Anodenmaterial im vollständig geladenen Zustand der Lithium-Ionen-Batterie vorzugsweise $\leq 2,2$, besonders bevorzugt $\leq 1,98$ und am meisten bevorzugt $\leq 1,76$. Das Li/Si-Verhältnis im Anodenmaterial im vollständig geladenen Zustand der Lithium-Ionen-Batterie ist vorzugsweise $\geq 0,22$, besonders bevorzugt $\geq 0,44$ und am meisten bevorzugt $\geq 0,66$.

Die Kapazität des Siliciums des Anodenmaterials der Lithium-Ionen-Batterie wird vorzugsweise zu $\leq 50\%$, besonders bevorzugt zu $\leq 45\%$ und am meisten bevorzugt zu $\leq 40\%$ genutzt, bezogen auf eine Kapazität von 4200 mAh pro Gramm Silicium.

Die Anode wird mit vorzugsweise $\leq 1500$ mAh/g, besonders bevorzugt $\leq 1400$ mAh/g und am meisten bevorzugt $\leq 1300$ mAh/g beladen, bezogen auf die Masse der Anode. Die Anode wird bevorzugt mit mindestens 600 mAh/g, besonders bevorzugt $\geq 700$ mAh/g und am meisten bevorzugt $\geq 800$ mAh/g beladen, bezogen auf die Masse der Anode. Diese Angaben beziehen sich vorzugsweise auf die vollständig geladene Lithium-Ionen-Batterie.

Der Lithiierungsgrad von Silicium beziehungsweise die Ausnutzung der Kapazität von Silicium für Lithium (Si-Kapazitätsnutzung $\alpha$) kann beispielsweise bestimmt werden, wie in der Patentanmeldung mit der Anmeldenummer DE 102015215415.7 auf Seite 11, Zeile 4 bis Seite 12, Zeile 25 beschrieben, insbesondere an Hand der dort genannten Formel für die Si-Kapazitätsnutzung $\alpha$ und den ergänzenden Angaben unter den Überschriften "Bestimmung der Deli- thiierungs-Kapazität $\beta$" und "Bestimmung des Si-Gewichtsanteils $\omega_{Si}$" ("incorporated by reference").

Überraschenderweise sind die erfindungsgemäß gepfropften Siliciumpartikel abwaschstabil, insbesondere in wässrigem Medium. Die Polymere sind an die gepfropften Siliciumpartikel unerwartet stabil angebunden und werden in wässrigem Medium nicht von den gepfropften Siliciumpartikeln abgewaschen. Vorteilhafterweise liegen die erfindungsgemäßen Produkte in Form von Partikeln vor. Es sind sogar nicht-aggregierte gepfropfte Siliciumpartikel zugänglich.

Die erfindungsgemäß gepfropften Siliciumpartikel sind vorteilhafterweise auch in wässrigen Tintenformulierungen für Anoden von Lithiumionen-Batterien stabil und neigen unter solchen Bedingungen überraschenderweise wenig oder gar nicht zur Wasserstoffbildung. Die Reaktivität der Oberfläche der Siliciumpartikel ist in den erfindungsgemäßen Partikeln also dramatisch gesenkt. Dies ermöglicht eine Verarbeitung ohne ein Aufschäumen der wässrigen Tintenformulierung und die Herstellung von besonders homogenen bzw. Gasblasen-freien Anoden.

Zudem zeigen erfindungsgemäße Anoden eine bessere elektrochemische Performance. Eine weitere Verbesserung der Zyklenstabilität der Lithiumionen-Batterien kann erreicht werden, wenn die Batterien unter Teilbeladung betrieben werden.

Die nachfolgenden Beispiele dienen zur weiteren Erläuterung der Erfindung:
Folgende analytische Methoden und Geräte wurden zur Charakterisierung eingesetzt:

Bestimmung der Partikelgrößen:

Die Messung der Partikelverteilung wurde durch statische Laserstreuung unter Anwendung des Mie-Modells mit einem Horiba LA 950 in einer stark verdünnten Suspension in Wasser oder Ethanol durchgeführt. Die angegebenen mittleren Partikelgrößen sind volumengewichtet.

Anorganische Analytik / Elementaranalyse:

Die C-Gehalte wurden mit einem Leco CS 230 Analysator ermittelt, zur Bestimmung von O- und N-Gehalten wurde ein Leco TCH-600 Analysator eingesetzt.

Bestimmung des Aggregationsgrades / Siebrückstandes > 20 $\mu$m:

Eine Probe der nach der Trocknung erhaltenen polymerbeschichteten Partikel wurde durch Nassiebung mit einer Siebmaschine AS 200 basic (Retsch GmbH) mit Wasser an Edelstahlsieben von Überkorn > 20 $\mu$m befreit. Der Siebrückstand wurde getrocknet und ausgewogen und so der Siebrückstand > 20 $\mu$m bestimmt.

Bestimmung der Wasserstoff-Entwicklung ($H_2$-Entwicklung) durch GC Messung (Headspace):

Es wurden 50 mg (für Bestimmung bei 80°C) oder 100 mg (für Bestimmung bei 40°C) der Probe in ein GC- Headspace Gläschen (22 ml) eingewogen und mit 5 ml eines wässrigen Li-Acetat Puffers (pH 7; 0,1 M) versetzt, das Gläschen verschlossen und unter Rühren für für 30 Minuten in einem Aluminiumblock auf 80°C erhitzt.

Die Bestimmung des Wasserstoffgehalts in der Gasphase wurde mittels GC-Messung durchgeführt. Detektiert wurde über Wärmeleitfähigkeitsdetektion. Die Angabe des Wasserstoffanteils erfolgte in Volumenprozent der Gasphase. Weitere detektierte Gase waren Sauerstoff, Stickstoff und Argon.

**Beispiel 1:**

Herstellung von Siliciumpartikeln durch Mahlen:

Das Siliciumpulver wurde durch Mahlung eines groben Si-Splitts aus der Produktion von Solarsilicium in einer Fließbettstrahlmühle (Netzsch-Condux CGS16 mit 90 m$^3$/h Stickstoff bei 7 bar als Mahlgas) hergestellt.

Partikelgrößenverteilung der so erhaltenen Siliciumpartikel (bestimmt mit Ethanol als Dispergiermittel): d10 = 2,23 $\mu$m, d50 = 4,48 $\mu$m und d90 = 7,78 $\mu$m und von Breite (d90-d10) von 5,5 $\mu$m.

Die REM-Aufnahme des trockenen Si-Staubs in Fig. 2 zeigt, dass die Probe aus einzelnen, nicht aggregierten, splitterförmigen Partikeln bestand.

Der O-Gehalt der Partikel betrug 0,23 %.

Die Gasentwicklung, bestimmt durch Rühren von Si-Partikeln (50 mg) in 5 ml eines 0,1 M Li-Acetat (pH 7) in einem HGC Headspace-Vial (Gesamtvolumen 22 ml), bei 80°C für 30 Min und Bestimmung der $H_2$-Menge im Gasraum

lieferte 4,36 Vol.-% Wasserstoff.

**Beispiel 2:**

Silanisieren von Siliciumpartikeln:

Es wurden 25 g Si-Partikel aus Beispiel 1 in 200 ml Toluol vorgelegt und 2,5 g 3-(Trimethoxysilyl)-propylmethacrylat zugegeben, entgast, p-Toluolsulfonsäure (50 mg) zugegeben und für 3 h bei 40°C gerührt. Anschließend wurde die Reaktionslösung zentrifugiert, der Niederschlag mit Toluol sowie Ethanol gewaschen und bei 60°C im Vakuum getrocknet. Die erhaltenen Partikel wiesen einen Kohlenstoffgehalt von 0,07 Gew.-% auf und wurden direkt in weiteren Umsetzungen eingesetzt.

**Beispiel 3:**

Beschichten der Siliciumpartikel mit Polyacrylsäure:

Es wurden 10 g der Si-Partikel aus Beispiel 2 in 100 ml Toluol suspendiert und 2 g Acrylsäure zugegeben.
Die erhaltene Suspension wurde entgast und mit Argon geflutet. Es wurden 40 mg AIBN als Initiator zugegeben und die erhaltene Suspension für 1h auf 80°C erhitzt. Nach Abkühlen der Reaktionslösung wurden die Partikel durch Zentrifugation vom Überstand abgetrennt und durch wiederholte Waschungen mit Ethanol, Wasser und Aceton von überschüssigem Monomer und freiem Polymer befreit. Die erhaltenen Partikel wurden im Vakuum bei 60°C getrocknet.
Im so erhaltenen Produkt war die Polyacrylsäure abwaschstabil an die Siliciumpartikel angebunden, insbesondere in wässrigem Medium.
Das erhaltene Produkt wies einen O-Gehalt von 0,72 % sowie einen C-Gehalt von 0,53 %. Dies entspricht einem Polymergehalt von 1,1 Gew.-% und einer rechnerischen mittleren Schichtdicke des Polymers von 14 nm.
Die Messung der Partikelverteilung am dabei gewonnenen Produkt durch statische Laserstreuung unter Anwendung des Mie-Modells mit einem Horiba LA 950 in einer stark verdünnten Suspension in Wasser ergab d10 = 2,30 $\mu$m, d50 = 4,73 $\mu$m und d90 = 7,98 $\mu$m sowie eine Breite (d90-d10) von 5,68 $\mu$m auf.
Der Siebrückstand > 20 $\mu$m war kleiner 1 %.
Der $H_2$-Gehalt in der Gasphase beträgt 0,00 Vol.-%.

**Beispiel 4:**

Beschichten der Siliciumpartikel mit einem Acrylsäure-Vinylencarbonat-Copolymer:

Es wurden 10 g der Si-Partikel aus Beispiel 2 in 100 ml Toluol suspendiert und 5,5 g Vinylencarbonat und 4,5 g Acrylsäure zugegeben.
Die erhaltene Suspension wurde entgast und mit Argon geflutet. Es wurden 80 mg AIBN als Initiator zugegeben und die erhaltene Suspension für 1h auf 80°C erhitzt. Nach Abkühlen der Reaktionslösung wurden die Partikel durch Zentrifugation vom Überstand abgetrennt und durch wiederholte Waschungen mit Ethanol, Wasser und Aceton von überschüssigem Monomer und freiem Polymer befreit. Die erhaltenen Partikel wurden im Vakuum bei 60°C getrocknet.
Im so erhaltenen Produkt war das Copolymer abwaschstabil an die Siliciumpartikel angebunden, insbesondere in wässrigem Medium. Das erhaltene Produkt wies einen O-Gehalt von 0,75 % sowie einen C-Gehalt von 0,46 %. Dies entspricht einem Polymergehalt von 1,0 Gew.-% und einer rechnerischen mittleren Schichtdicke des Polymers von 12 nm.
Die Messung der Partikelverteilung am dabei gewonnenen Produkt durch statische Laserstreuung unter Anwendung des Mie-Modells mit einem Horiba LA 950 in einer stark verdünnten Suspension in Wasser ergab d10 = 2,34 $\mu$m, d50 = 4,77 $\mu$m und d90 = 8,06 $\mu$m sowie eine Breite (d90-d10) von 5,72 $\mu$m auf.
Der Siebrückstand > 20 $\mu$m war kleiner 1 %.
Der $H_2$-Gehalt in der Gasphase beträgt 0,00 Vol.-%.

**Beispiel 5:**

Anode mit dem Produkt aus Beispiel 3:

29,709 g bei 85° C bis zur Gewichtskonstanz getrockneter Polyacrylsäure und 756,60 g deionisiertes Wasser wurden mittels Schüttler (290 l/min) für ca. 2,5 h bis zur vollständigen Lösung der Polyacrylsäure bewegt. Zu der Lösung wurde Lithiumhydroxid Monohydrat portionsweise hinzugegeben, bis der pH-Wert bei 7,0 lag (gemessen mit pH-Meter WTW pH 340i und Sonde SenTix RJD). Die Lösung wurde anschließend mittels Schüttler weitere 4 h durchmischt.

7,00 g der Siliciumpartikel aus Beispiel 3 wurden dann in 12,50 g der neutralisierten Polyacrylsäure-Lösung und 5,10 g deionisiertem Wasser mittels Dissolver bei einer Umlaufgeschwindigkeit von 4,5 m/s für 5 min und von 12 m/s für 30 min unter Kühlung bei 20°C dispergiert. Nach Zugabe von 2,50 g Graphit (I-merys, KS6L C) wurde dann weitere 30 min bei einer Umlaufgeschwindigkeit von 12 m/s gerührt. Nach Entgasen wurde die Dispersion mittels eines Filmziehrahmens mit 0,08 mm Spalthöhe (Erichsen, Modell 360) auf eine Kupferfolie mit Dicke von 0,030 mm (Schlenk Metallfolien, SE-Cu58) aufgebracht. Die so hergestellte Anodenbeschichtung wurde anschließend 60 min bei 80°C und 1 bar Luftdruck getrocknet.

Das mittlere Flächengewicht der trockenen Anodenbeschichtung aus Beispiel 5 mit den Partikeln aus Beispiel 3 betrug 2,97 mg/cm$^2$ und die Beschichtungsdichte 0,99 g/cm$^3$. Das mittlere Flächengewicht der trockenen Anodenbeschichtung aus Beispiel 6 mit den Partikeln aus Beispiel 4 betrug 2,73 mg/cm$^2$ und die Beschichtungsdichte 0,93 g/cm$^3$.

**Beispiel 6:**

Anode mit dem Produkt aus Beispiel 4:

Beispiel 6 wurde identisch ausgeführt wie Beispiel 5, mit dem einzigen Unterschied, dass die Siliciumpartikel aus Beispiel 4 an Stelle der Siliciumpartikel aus Beispiel 3 eingesetzt wurden.

**Beispiel 7 (Bsp.7):**

Erfindungsgemäße Lithium-Ionen-Batterie mit der Anode aus Beispiel 5:

Die elektrochemischen Untersuchungen wurden an einer Knopfzelle (Typ CR2032, Hohsen Corp.) in 2-Elektroden-Anordnung durchgeführt. Die Elektrodenbeschichtung aus Beispiel 5 wurde als Gegenelektrode bzw. negative Elektrode (Dm = 15 mm) eingesetzt, eine Beschichtung auf Basis von Lithium-Nickel-Mangan-Kobaltoxid 6:2:2 mit Gehalt von 94,0 % und mittlerem Flächengewicht von 14,8 mg/cm$^2$ als Arbeitselektrode bzw. positive Elektrode (Dm = 15 mm) verwendet. Ein mit 120 μl Elektrolyt getränktes, Glasfaser-Filterpapier (Whatman, GD Type D) diente als Separator (Dm = 16 mm). Der verwendete Elektrolyt bestand aus einer 1,0-molaren Lösung von Lithiumhexafluorophosphat in einem 3:7 (v/v) Gemisch von Fluorethylencarbonat und Ethylmethylcarbonat, welche mit 2,0 Gew.-% Vinylencarbonat versetzt war. Der Bau der Zelle erfolgte in einer Glovebox (< 1 ppm $H_2O$, $O_2$), der Wassergehalt in der Trockenmasse aller verwendeten Komponenten lag unterhalb von 20 ppm.

Die elektrochemische Testung wurde bei 20°C durchgeführt. Das Laden der Zelle erfolgte im cc/cv-Verfahren (constant current / constant voltage) mit konstantem Strom von 5 mA/g (entspricht C/25) im ersten Zyklus und von 60 mA/g (entspricht C/2) in den darauffolgenden Zyklen und nach Erreichen der Spannungsgrenze von 4,2 V mit konstanter Spannung bis Unterschreiten eines Stroms von 1,2 mA/g (entspricht C/100) bzw. 15 mA/g (entspricht C/8). Das Entladen der Zelle erfolgte im cc-Verfahren (constant current) mit konstantem Strom von 5 mA/g (entspricht C/25) im ersten Zyklus und von 60 mA/g (entspricht C/2) in den darauffolgenden Zyklen bis Erreichen der Spannungsgrenze von 3,0 V. Der gewählte spezifische Strom bezog sich auf das Gewicht der Beschichtung der positiven Elektrode.

**Beispiel 8 (Bsp. 8):**

Erfindungsgemäße Lithium-Ionen-Batterie mit der Anode aus Beispiel 6:

Beispiel 8 wurde identisch ausgeführt wie Beispiel 7, mit dem einzigen Unterschied, dass die Elektrodenbeschichtung aus Beispiel 6 an Stelle der Elektrodenbeschichtung aus Beispiel 5 eingesetzt wurde.

**Vergleichsbeispiel 9:**

Anode mit den nicht Polymer-beschichteten, Siliciumpartikeln aus Beispiel 1:

Mit den Siliciumpartikeln aus Beispiel 1 wurde analog zu Beispiel 5 eine Anode hergestellt. Das mittlere Flächengewicht der so hergestellten Anodenbeschichtung betrug 2,94 mg/cm$^2$ und die Beschichtungsdichte 1,0 g/cm$^3$.

**Vergleichsbeispiel 10 (VBsp. 10):**

Lithium-Ionen-Batterie mit der Anode aus Vergleichsbeispiel 9:

Die Anode mit den nicht beschichteten Siliciumpartikeln aus Vergleichsbeispiel 9 wurde wie in Beispiel 7 beschrieben getestet.

Auf Grund der Rezeptierung in den (Vergleichs)Beispielen 7, 8 und 10 wurde die Lithium-Ionen-Batterie durch Zellbalancing unter Teil-Lithiierung der Anode betrieben. In Tabelle 1 sind die Austestungsergebnisse von Beispiel 7 und 8 sowie dem Vergleichsbeispiel 10 zusammengefasst.

**Tabelle 1:** Austestungsergebnisse der (Vergleichs)Beispiele 7, 8 und 10:

| (V) Bsp. | Polymer gepfropftes Silicium | Entladekapazität nach Zyklus 1 [mAh/cm$^2$] | Zyklenzahl mit $\geq$ 80% Kapazitätserhalt |
|---|---|---|---|
| 7 | Ja | 2,05 | 213 |
| 8 | Ja | 2,02 | 218 |
| 10 | Nein | 2,03 | 187 |

Die Lithium-Ionen-Batterien aus Beispiel 7 und 8 zeigen im Vergleich zur Lithium-Ionen-Batterie des Vergleichsbeispiels 10 überraschenderweise ein stabileres elektrochemisches Verhalten.

**Vergleichsbeispiel 11:**

Beschichten von Si-Partikeln mit Polyacrylsäuresalz:

In 500 ml Wasser wurden 0,65 g Natriumhydroxid gelöst, mit 1,365 g Polyacrylsäure versetzt und bis zum Erhalt einer klaren Lösung gerührt. Der pH Wert der Lösung betrug 6,0.

250 ml dieser Lösung wurden mit 25 g Si-Partikeln aus Beispiel 1 versetzt und bei 25°C für 30 Minuten gerührt. Anschließend wurde das Lösungsmittel bei 150°C entfernt und die Partikel bei 80°C im Vollvakuum nachgetrocknet.

Die erhaltenen Partikel wiesen einen C-Gehalt von 0,64 % sowie einen O-Gehalt von 23,5 % auf.

5 g der erhaltenen, beschichteten Partikel wurden mit Wasser gewaschen. Dadurch wurde die gesamte Beschichtung entfernt (festgestellt durch Bestimmung des C-Gehaltes der Si-Partikel). Die Waschstabilität ist somit negativ.

**Patentansprüche**

1. Mit Polymeren gepfropfte Siliciumpartikel, wobei die Siliciumpartikel durchschnittliche Partikelgrößen d$_{50}$ von 1 $\mu$m bis 8 $\mu$m haben und die Polymere der mit Polymeren gepfropften Siliciumpartikel in wässrigem Medium abwaschstabil an die Siliciumpartikel angebunden sind und die Partikelgrößen durch statische Laserstreuung, wie in der Anmeldung beschrieben, bestimmt werden.

2. Mit Polymeren gepfropfte Siliciumpartikel gemäß Anspruch 1, **dadurch gekennzeichnet, dass** die Siliciumpartikel auf elementarem Silicium basieren.

3. Mit Polymeren gepfropfte Siliciumpartikel gemäß Anspruch 1 oder 2, **dadurch gekennzeichnet, dass** die Siliciumpartikel durchschnittliche Partikelgrößen d$_{50}$ von 3 $\mu$m bis 6 $\mu$m haben.

4. Verfahren zur Herstellung der mit Polymeren gepfropften Siliciumpartikel aus Anspruch 1 bis 3, indem ein oder mehrere ethylenisch ungesättigte Monomere in Gegenwart von Siliciumpartikeln mit durchschnittlichen Partikelgrößen von 1 $\mu$m bis 8 $\mu$m mittels radikalisch initiierter Polymerisation polymerisiert werden, wobei die Oberfläche der eingesetzten Siliciumpartikel ein oder mehrere funktionelle Gruppen trägt ausgewählt aus der Gruppe umfassend a) Si-H-Gruppen, b) organische funktionelle Gruppen ausgewählt aus der Gruppe umfassend Alkane und Aromaten und c) ethylenisch ungesättigte Silan-Gruppen.

5. Verfahren zur Herstellung der mit Polymeren gepfropften Siliciumpartikel gemäß Anspruch 4, **dadurch gekennzeichnet, dass** die Siliciumpartikel mit den Si-H-Gruppen a) und/oder den organischen funktionellen Gruppen b) erhältlich sind durch Mahlen von Siliciumpartikeln nach Trocken- oder Nassmahlverfahren und die Siliciumpartikel mit den ethylenisch ungesättigten Silan-Gruppen c) erhältlich sind durch Silanisieren von Siliciumpartikeln mit einem oder mehreren ethylenisch ungesättigten Silanen, die mit einer oder mehreren hydrolytisch abspaltbaren Gruppen substituiert sind.

**6.** Verfahren zur Herstellung der mit Polymeren gepfropften Siliciumpartikel gemäß Anspruch 4 oder 5, **dadurch gekennzeichnet, dass** die Siliciumpartikel, die auf der Oberfläche organische funktionelle Gruppen b) und/oder ethylenisch ungesättigte Silan-Gruppen c) tragen, einen Kohlenstoffgehalt von 0,03 bis 2 Gew.% haben, bezogen auf das Gesamtgewicht der Siliciumpartikel.

**7.** Verfahren zur Herstellung der mit Polymeren gepfropften Siliciumpartikel gemäß Anspruch 4 bis 6, **dadurch gekennzeichnet, dass** die ethylenisch ungesättigten Monomere für die radikalisch initiierte Polymerisation ausgewählt werden aus der Gruppe umfassend Acrylsäure, Methacrylsäure, Vinylencarbonat, Methylmethacrylat, Styrol, funktionalisierte Styrol-Derivate, Vinylpyridin, Dimethylaminoethylmethacrylat, Hydroxyethylmethacrylat, Ethylenglykoldimethacrylat, Glycidylmethacrylat und Polyethylenglykolmethacrylat.

**8.** Mit Polymeren gepfropfte Siliciumpartikel erhältlich nach den Verfahren gemäß Anspruch 4 bis 7.

**9.** Mit Polymeren gepfropfte Siliciumpartikel gemäß der Ansprüche 1 bis 3 oder 8, **dadurch gekennzeichnet, dass** die abwaschstabile Anbindung der Polymere an die Siliciumpartikel in wässrigem Medium sich dadurch auszeichnet, dass nach Waschen der mit Polymeren gepfropften Siliciumpartikel mit Wasser bei pH 7 und 20°C und anschließendem Abtrennen des Wassers sowie anschließendem Trocknen der mit Polymeren gepfropften Siliciumpartikel $\geq$ 99 Gew.-% mit Polymeren gepfropfte Siliciumpartikel reisoliert werden, bezogen auf das Trockengewicht der zur Ermittlung der abwaschstabilen Anbindung eingesetzten mit Polymeren gepfropften Siliciumpartikel.

**10.** Mit Polymeren gepfropfte Siliciumpartikel gemäß der Ansprüche 1 bis 3 oder 8 bis 9, **dadurch gekennzeichnet, dass** die mit Polymeren gepfropften Siliciumpartikel nicht aggregiert sind.

**11.** Mit Polymeren gepfropfte Siliciumpartikel gemäß der Ansprüche 1 bis 3 oder 8 bis 10, **dadurch gekennzeichnet, dass** die mit Polymeren gepfropften Siliciumpartikel zu 0,3 bis 20 Gew.% auf Polymeren basieren, bezogen auf das Gesamtgewicht der mit Polymeren gepfropften Siliciumpartikel.

**12.** Mit Polymeren gepfropfte Siliciumpartikel gemäß der Ansprüche 1 bis 3 oder 8 bis 11, **dadurch gekennzeichnet, dass** die mit Polymeren gepfropften Siliciumpartikel zu 80 bis 99,7 Gew.% auf Silicium basieren, bezogen auf das Gesamtgewicht der mit Polymeren gepfropften Siliciumpartikel.

**13.** Mit Polymeren gepfropfte Siliciumpartikel gemäß der Ansprüche 1 bis 3 oder 8 bis 12, **dadurch gekennzeichnet, dass** die mit Polymeren gepfropften Siliciumpartikel einen Kohlenstoffgehalt von 0,2 bis 10 Gew.% haben, bezogen auf das Gesamtgewicht der mit Polymeren gepfropften Siliciumpartikel.

**14.** Anodenmaterialien für Lithium-Ionen-Batterien enthaltend ein oder mehrere Bindemittel, gegebenenfalls Graphit, gegebenenfalls eine oder mehrere weitere elektrisch leitende Komponenten und gegebenenfalls ein oder mehrere Additive, **dadurch gekennzeichnet, dass** ein oder mehrere mit Polymeren gepfropfte Siliciumpartikel aus Anspruch 1 bis 3 oder 8 bis 13 enthalten sind.

**15.** Lithium-Ionen-Batterien umfassend eine Kathode, eine Anode, einen Separator und einen Elektrolyt, **dadurch gekennzeichnet, dass** die Anode auf einem Anodenmaterial basiert, das ein oder mehrere mit Polymeren gepfropfte Siliciumpartikel aus Anspruch 1 bis 3 oder 8 bis 13 enthält.

**16.** Lithium-Ionen-Batterien gemäß Anspruch 15, **dadurch gekennzeichnet, dass** das Anodenmaterial in der vollständig geladenen Lithium-Ionen-Batterie nur teilweise lithiiert.

**17.** Lithium-Ionen-Batterien gemäß Anspruch 16, **dadurch gekennzeichnet, dass** die Anode in der vollständig geladenen Lithium-Ionen-Batterie mit 600 bis 1500 mAh/g beladen ist, bezogen auf die Masse der Anode.

**18.** Lithium-Ionen-Batterien gemäß Anspruch 16 oder 17, **dadurch gekennzeichnet, dass** im vollständig geladenen Zustand der Lithium-Ionen-Batterie das Verhältnis der Lithiumatome zu den Siliciumatomen im Anodenmaterial $\leq$ 2,2 beträgt.

**19.** Lithium-Ionen-Batterien gemäß Anspruch 16 bis 18, **dadurch gekennzeichnet, dass** die Kapazität des Siliciums des Anodenmaterials der Lithium-Ionen-Batterie zu $\leq$ 50% genutzt wird, bezogen auf die maximale Kapazität von 4200 mAh pro Gramm Silicium.

**Claims**

1. Polymer-grafted silicon particles, wherein the silicon particles have average particle sizes $d_{50}$ of 1 $\mu$m to 8 $\mu$m and the polymers of the polymer-grafted silicon particles are attached to the silicon particles in a wash-stable manner in an aqueous medium and the particle sizes are determined by static laser scattering as described in the application.

2. Polymer-grafted silicon particles according to Claim 1, **characterized in that** the silicon particles are based on elemental silicon.

3. Polymer-grafted silicon particles according to Claim 1 or 2, **characterized in that** the silicon particles have average particle sizes $d_{50}$ of 3 $\mu$m to 6 $\mu$m.

4. Method for preparing polymer-grafted silicon particles of Claim 1 to 3, in which one or more ethylenically unsaturated monomers are polymerized in the presence of silicon particles having average particle sizes of 1 $\mu$m to 8 $\mu$m by means of radically initiated polymerization, wherein the surface of the silicon particles used bears one or more functional groups selected from the group comprising a) Si-H groups, b) organic functional groups selected from the group comprising alkanes and aromatics and c) ethylenically unsaturated silane groups.

5. Method for preparing polymer-grafted silicon particles according to Claim 4, **characterized in that** the silicon particles having Si-H groups a) and/or organic functional groups b) are obtainable by milling silicon particles after a drying process or wet milling process and the silicon particles having ethylenically unsaturated silane groups c) are obtainable by silanizing silicon particles with one or more ethylenically unsaturated silanes, which have been substituted by one or more groups that may be cleaved hydrolytically.

6. Method for preparing polymer-grafted silicon particles according to Claim 4 or 5, **characterized in that** the silicon particles bearing organic functional groups b) and/or ethylenically unsaturated silane groups c) on the surface have a carbon content of 0.03 to 2% by weight, based on the total weight of the silicon particles.

7. Method for preparing polymer-grafted silicon particles according to Claim 4 to 6, **characterized in that** the ethylenically unsaturated monomers for the radically intitiated polymerization are selected from the group comprising acrylic acid, methacrylic acid, vinylene carbonate, methyl methacrylate, styrene, functionalized styrene derivatives, vinylpyridine, dimethylaminoethyl methacrylate, hydroxyethyl methacrylate, ethylene glycol dimethacrylate, glycidyl methacrylate and polyethylene glycol methacrylate.

8. Polymer-grafted silicon particles obtainable by the method according to Claim 4 to 7.

9. Polymer-grafted silicon particles according to Claims 1 to 3 or 8, **characterized in that** the wash-stable binding of the polymers to the silicon particles in aqueous medium is **characterized in that**, after washing the polymer-grafted silicon particles with water at pH 7 and 20°C and subsequent removal of the water and subsequent drying of the polymer-grafted silicon particles, $\geq$ 99% by weight of the polymer-grafted silicon particles are reisolated, based on the dry weight of polymer-grafted silicon particles used for determining the wash-stable binding.

10. Polymer-grafted silicon particles according to Claims 1 to 3 or 8 to 9, **characterized in that** the polymer-grafted silicon particles are not aggregated.

11. Polymer-grafted silicon particles according to Claims 1 to 3 or 8 to 10, **characterized in that** the polymer-grafted silicon particles are based on polymers up to an extent of 0.3 to 20% by weight, based on the total weight of the polymer-grafted silicon particles.

12. Polymer-grafted silicon particles according to Claims to 3 or 8 to 11, **characterized in that** the polymer-grafted silicon particles are based on silicon up to an extent of 80 to 99.7% by weight, based on the total weight of the polymer-grafted silicon particles.

13. Polymer-grafted silicon particles according to Claims 1 to 3 or 8 to 12, **characterized in that** the polymer-grafted silicon particles have a carbon content of 0.2 to 10% by weight, based on the total weight of the polymer-grafted silicon particles.

14. Anode materials for lithium ion batteries comprising one or more binders, optionally graphite, optionally one or more further electrically conducting components and optionally one or more additives, **characterized in that** one or more polymer-grafted silicon particles of Claims 1 to 3 or 8 to 13 are present.

15. Lithium ion batteries comprising a cathode, an anode, a separator and an electrolyte, **characterized in that** the anode is based on an anode material comprising one or more polymer-grafted silicon particles of Claims 1 to 3 or 8 to 13.

16. Lithium ion batteries according to Claim 15, **characterized in that** the anode material is only partially lithiated in the fully charged lithium ion battery.

17. Lithium ion batteries according to Claim 16, **characterized in that** the anode in the fully charged lithium ion battery is charged with 600 to 1500 mAh/g, based on the mass of the anode.

18. Lithium ion batteries according to Claim 16 or 17, **characterized in that**, in the lithium ion battery in the fully charged state, the ratio of lithium atoms to silicon atoms in the anode material is $\leq 2.2$.

19. Lithium ion batteries according to Claim 16 to 18, **characterized in that** the capacity of the silicon of the anode material in the lithium ion battery is utilized to an extent of $\leq 50\%$, based on the maximum capacity of 4200 mAh per gram of silicon.

## Revendications

1. Particules de silicium greffées avec des polymères, les particules de silicium ayant des tailles de particules moyennes $d_{50}$ de 1 $\mu$m à 8 $\mu$m et les polymères des particules de silicium greffées avec des polymères en milieu aqueux étant reliés aux particules de silicium d'une manière stable au lavage, et les tailles de particules étant déterminées par diffusion laser statique, tel que décrit dans la demande.

2. Particules de silicium greffées avec des polymères selon la revendication 1, **caractérisées en ce que** les particules de silicium sont à base de silicium élémentaire.

3. Particules de silicium greffées avec des polymères selon la revendication 1 ou 2, **caractérisées en ce que** les particules de silicium ont des tailles de particules moyennes $d_{50}$ de 3 $\mu$m à 6 $\mu$m.

4. Procédé de fabrication des particules de silicium greffées avec des polymères selon les revendications 1 à 3, selon lequel un ou plusieurs monomères éthyléniquement insaturés sont polymérisés en présence de particules de silicium ayant des tailles de particules moyennes de 1 $\mu$m à 8 $\mu$m par polymérisation initiée radicalairement, la surface des particules de silicium utilisées portant un ou plusieurs groupes fonctionnels choisis dans le groupe comprenant a) les groupes Si-H, b) les groupes fonctionnels organiques choisis dans le groupe comprenant les alcanes et les groupes aromatiques, et c) les groupes silane éthyléniquement insaturés.

5. Procédé de fabrication des particules de silicium greffées avec des polymères selon la revendication 4, **caractérisé en ce que** les particules de silicium comprenant les groupes Si-H a) et/ou les groupes fonctionnels organiques b) peuvent être obtenues par broyage de particules de silicium par des procédés de broyage en voie sèche ou humide, et les particules de silicium comprenant les groupes silane éthyléniquement insaturés c) peuvent être obtenues par silanisation de particules de silicium avec un ou plusieurs silanes éthyléniquement insaturés, qui sont substitués avec un ou plusieurs groupes clivables hydrolytiquement.

6. Procédé de fabrication des particules de silicium greffées avec des polymères selon la revendication 4 ou 5, **caractérisé en ce que** les particules de silicium qui portent sur la surface des groupes fonctionnels organiques b) et/ou des groupes silane éthyléniquement insaturés c) ont une teneur en carbone de 0,03 à 2 % en poids, par rapport au poids total des particules de silicium.

7. Procédé de fabrication des particules de silicium greffées avec des polymères selon les revendications 4 à 6, **caractérisé en ce que** les monomères éthyléniquement insaturés pour la polymérisation initiée radicalairement sont choisis dans le groupe comprenant l'acide acrylique, l'acide méthacrylique, le carbonate de vinylène, le méthacrylate de méthyle, le styrène, les dérivés de styrène fonctionnalisés, la vinylpyridine, le méthacrylate de diméthylaminoéthyle, le méthacrylate d'hydroxyéthyle, le diméthacrylate d'éthylène glycol, le méthacrylate de glycidyle et le méthacrylate de polyéthylène glycol.

8. Particules de silicium greffées avec des polymères pouvant être obtenues par le procédé selon les revendications 4 à 7.

9. Particules de silicium greffées avec des polymères selon les revendications 1 à 3 ou 8, **caractérisées en ce que** la liaison stable au lavage des polymères sur les particules de silicium en milieu aqueux est **caractérisée en ce qu'**après un lavage des particules de silicium greffées avec des polymères avec de l'eau à pH 7 et 20 °C, et séparation ultérieure de l'eau et séchage ultérieur des particules de silicium greffées avec des polymères, $\geq$ 99 % en poids des particules de silicium greffées avec des polymères sont de nouveau isolées, par rapport au poids sec des particules de silicium greffées avec des polymères utilisées pour la détermination de la liaison stable au lavage.

10. Particules de silicium greffées avec des polymères selon les revendications 1 à 3 ou 8 à 9, **caractérisées en ce que** les particules de silicium greffées avec des polymères ne sont pas agrégées.

11. Particules de silicium greffées avec des polymères selon les revendications 1 à 3 ou 8 à 10, **caractérisées en ce que** les particules de silicium greffées avec des polymères sont à hauteur de 0,3 à 20 % en poids à base de polymères, par rapport au poids total des particules de silicium greffées avec des polymères.

12. Particules de silicium greffées avec des polymères selon les revendications 1 à 3 ou 8 à 11, **caractérisées en ce que** les particules de silicium greffées avec des polymères sont à hauteur de 80 à 99,7 % en poids à base de silicium, par rapport au poids total des particules de silicium greffées avec des polymères.

13. Particules de silicium greffées avec des polymères selon les revendications 1 à 3 ou 8 à 12, **caractérisées en ce que** les particules de silicium greffées avec des polymères ont une teneur en carbone de 0,2 à 10 % en poids, par rapport au poids total des particules de silicium greffées avec des polymères.

14. Matériaux d'anode pour batteries lithium-ion contenant un ou plusieurs liants, éventuellement du graphite, éventuellement un ou plusieurs composants électriquement conducteurs supplémentaires, et éventuellement un ou plusieurs additifs, **caractérisés en ce qu'**une ou plusieurs particules de silicium greffées avec des polymères selon les revendications 1 à 3 ou 8 à 13 sont contenues.

15. Batteries lithium-ion comprenant une cathode, une anode, un séparateur et un électrolyte, **caractérisées en ce que** l'anode est à base d'un matériau d'anode qui contient une ou plusieurs particules de silicium greffées avec des polymères selon les revendications 1 à 3 ou 8 à 13.

16. Batteries lithium-ion selon la revendication 15, **caractérisées en ce que** le matériau d'anode dans la batterie lithium-ion entièrement chargée n'est que partiellement lithié.

17. Batteries lithium-ion selon la revendication 16, **caractérisées en ce que** l'anode dans la batterie lithium-ion entièrement chargée est chargée avec 600 à 1 500 mAh/g, par rapport à la masse de l'anode.

18. Batteries lithium-ion selon la revendication 16 ou 17, **caractérisées en ce qu'**à l'état entièrement chargé de la batterie lithium-ion, le rapport entre les atomes de lithium et les atomes de silicium dans le matériau d'anode est $\leq$ 2,2.

19. Batteries lithium-ion selon les revendications 16 à 18, **caractérisées en ce que** la capacité du silicium du matériau d'anode de la batterie lithium-ion est utilisée à hauteur de $\leq$ 50 %, par rapport à la capacité maximale de 4 200 mAh par gramme de silicium.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1313158 A
- WO 13175241 A
- US 2016093879 A
- US 2016164081 A
- DE 102015215415